# EUROPEAN PATENT SPECIFICATION

(11) **EP 3 704 043 B1**
(45) Date of publication and mention of the grant of the patent: **21.05.2025**
(21) Application number: 18873288.7
(22) Date of filing: 30.10.2018
(51) Int. Cl.: B65G 43/02, B65G 39/00

(54) **CONVEYOR IDLER MONITORING APPARATUS, SYSTEMS, AND METHODS**
VORRICHTUNG, SYSTEME UND VERFAHREN ZUR ÜBERWACHUNG VON FÖRDERBANDROLLEN
APPAREIL, SYSTÈMES ET PROCÉDÉS DE SURVEILLANCE DE ROULEAU DE TRANSPORTEUR

(30) Priority: 30.10.2017 US 201762579026 P
(43) Date of publication of application: 09.09.2020
(73) Proprietor: Superior Industries, Inc., Morris, MN 56267 (US)
(72) Inventor: BAGGIO, Osvaldo, Morris MN 56267 (US); MARTINELLI, Eduardo, Morris MN 56267 (US)
(74) Representative: Barker Brettell LLP
(86) International application number: PCT/US2018/058302
(87) International publication number: WO 2019/089661

(56) References cited:
- WO-A1-2012/057680
- WO-A1-2012/057680
- WO-A1-2016/019431
- WO-A1-2016/019431
- WO-A1-2016/161473
- WO-A2-2015/042661
- WO-A2-2015/042661
- DE-U1- 29 621 357
- DE-U1- 29 621 357
- IT-A1- UB20 155 386
- US-A1- 2003 168 317

## Description

### BACKGROUND

The current disclosure concerns a conveyor idler monitoring apparatus. A known apparatus is shown in ITUB20155386A1, which discloses the preamble of claim 1 and describes a control system of a conveyor comprising rollers, each of said rollers comprising at least one sensor which provides a signal indicative of at least one physical parameter of said roller; and a transmitter capable of transmitting said signal. An identification number is associated with each of said rollers; said transmitter being able to transmit said identification number. The control system comprises an interrogator adapted to feed said roller transmitter of said plurality of rollers; said transmitter of a roller of said plurality of rollers fed by said interrogator, sends said signal and said identification number to said interrogator.

The problem is therefore to improve the efficiency of the maintenance of such systems.

### BRIEF DESCRIPTION OF THE DRAWINGS

FIG. 1 is a perspective view of an embodiment of a conveyor idler.
FIG. 2 is a cutaway side elevation view of the conveyor idler of FIG. 1.
FIG. 3 is a side elevation view of an embodiment of an idler shaft.
FIG. 4 is a top elevation view of the idler shaft of FIG. 3.
FIG. 5 is a side elevation view of an embodiment of a load sensor.
FIG. 6 schematically illustrates an embodiment of an idler monitoring system.
FIG. 7 is a cutaway front elevation view elevation view of another embodiment of a conveyor idler.
FIG. 8 schematically illustrates another embodiment of an idler monitoring system.
FIG. 9 illustrates an idler network monitoring system.
FIG. 10 is an end view of an embodiment of a power generator.
FIG. 11 is a side elevation view of an embodiment of a conveyor pulley.
FIG. 12 illustrates detail area A of FIG. 11.

### DESCRIPTION

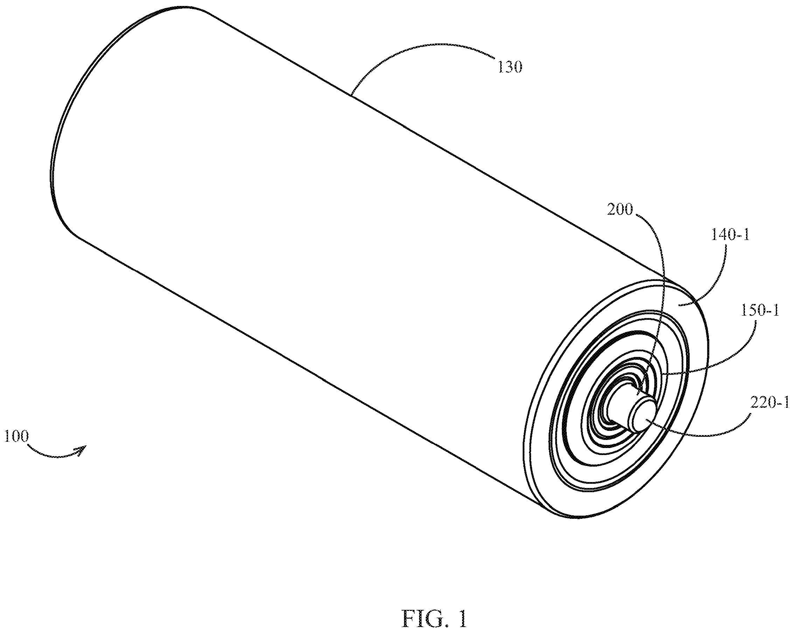

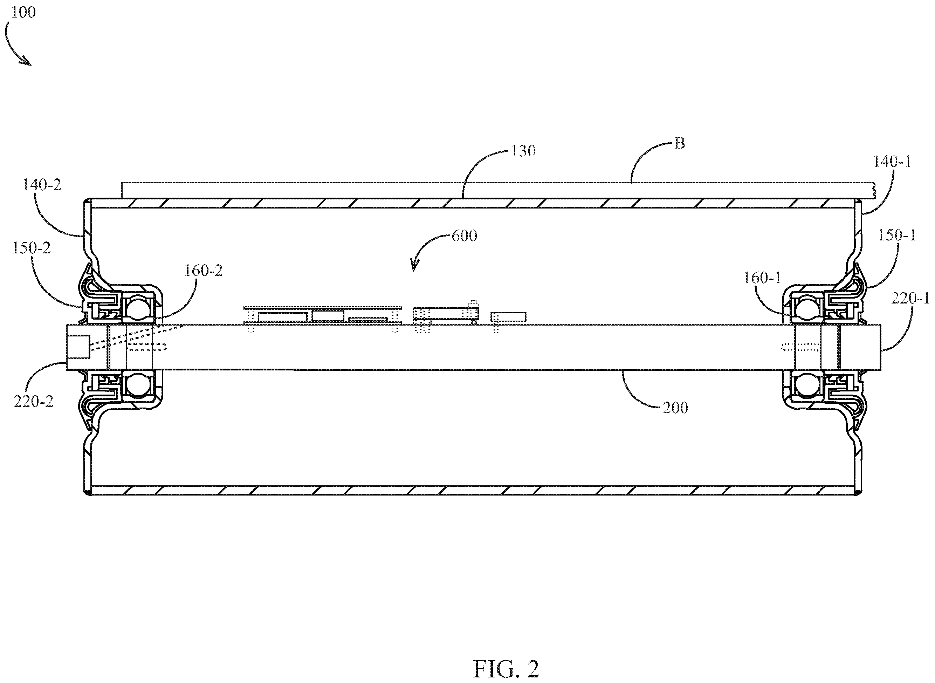

The invention is defined by independent claim 1, which solves the disclosed problem, embodiments are presented in the dependent claims. Referring to the drawings, wherein like reference numerals designate identical or corresponding parts throughout the several views, FIGs. 1 and 2 illustrate an embodiment of a conveyor idler 100. The conveyor idler 100 includes a cylinder 130 rollingly supported on a shaft 200. The shaft 200 is supported (e.g., in a stationary manner) on a conveyor. The cylinder 130 is configured to at least partially support a conveyor belt B.

The idler 100 optionally includes end discs 140-1, 140-2 disposed at opposing ends of the shaft 200 and mounted to opposing ends 220-1, 220-2 of the cylinder 130. Each end disc is optionally supported on an associated bearing 160 (e.g., ball bearing). A seal assembly 150 is optionally disposed outboard of each bearing assembly to at least partially prevent external liquid and/or debris from entering an interior volume of the idler 100.

Referring to FIG. 2, a monitoring system 600 (e.g., one of the monitoring system embodiments described herein) is optionally at least partially supported on the shaft 200.

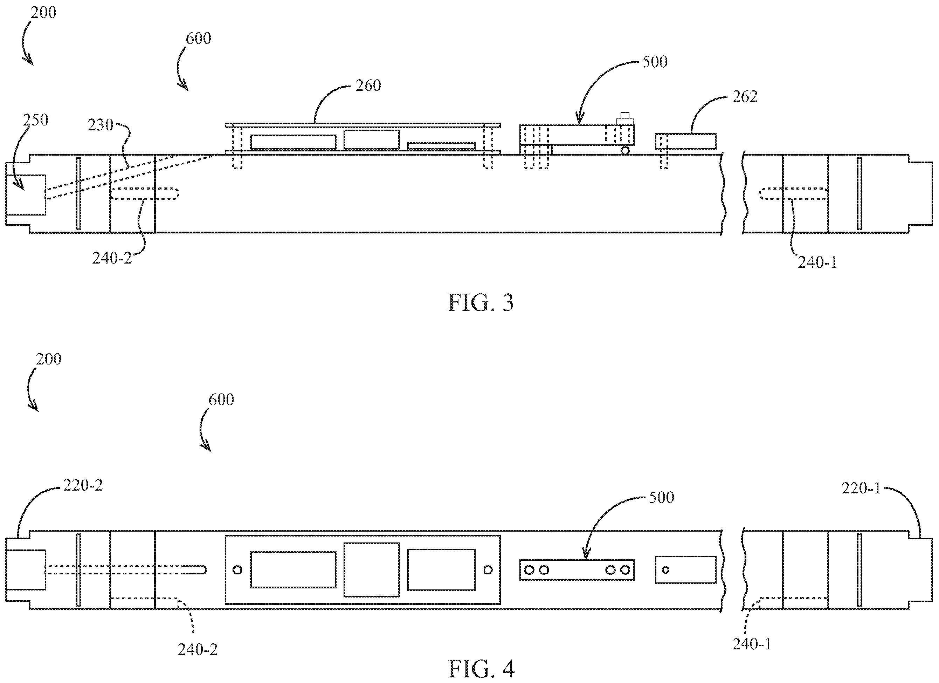

Referring to FIGs. 3 and 4, one or more mounting boards 260, 262 are optionally mounted to the shaft 200 for supporting one or more electronic components of the monitoring system 600. In some embodiments, a load sensor 500 is supported on (e.g., mounted to the shaft 200). In some embodiments, a cavity 250 is provided in an end 220 of the shaft 200 for housing a transmitter and/or other components of the monitoring system. An opening 230 is optionally provided in the shaft for at least partially receiving one or more electrical connectors (e.g., wire, cable, etc.) which optionally connect the transmitter to the load sensor 500 and/or other components supported on the shaft 200 (e.g., on mounting board 260). In some embodiments, a transmitter is at least partially received in the cavity 250. In alternative embodiments, a cavity 250 may be omitted and the transmitter is optionally mounted on the end 220 of the shaft or elsewhere on the idler and/or conveyor.

In some embodiments, one or more cavities 240 are provided adjacent to (e.g., radially inward of) the bearing 160. In some embodiments, each cavity 240 is provided in a radially outer surface of the shaft 200. In some embodiments, a temperature sensor 635 (e.g., resistance temperature detector, thermocouple, etc.) is at least partially received in one or more cavities 240.

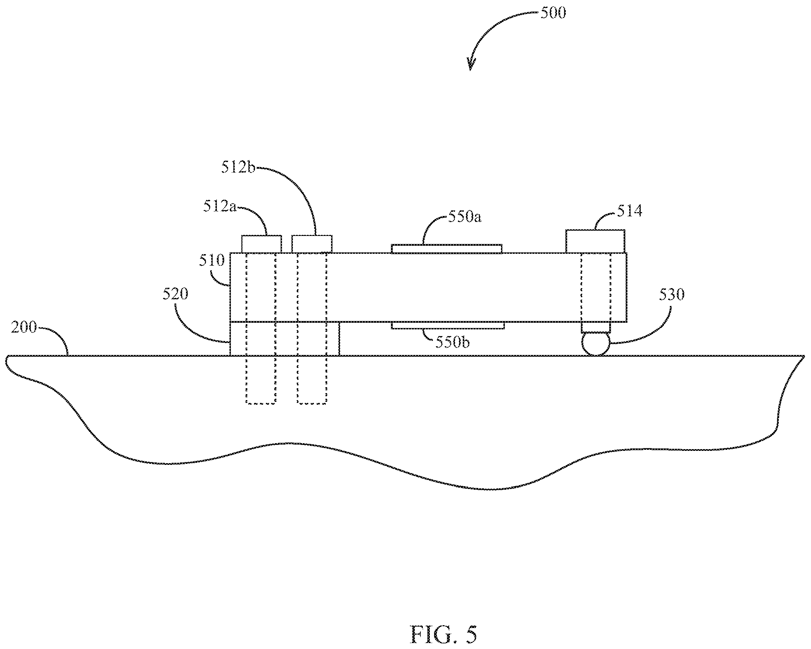

Referring to FIG. 5, an embodiment of a load sensor 500 is illustrated. The load sensor 500 optionally includes a deflector arm 510. One or more strain gauges 550 are optionally mounted to the deflector arm (e.g., in a Wheatstone bridge or other arrangement). The deflector arm 510 is optionally mounted to the shaft 200 (e.g., an upper surface of the shaft, disposed between the shaft and the conveyor belt, etc.) such as by one or more bolts 512. The deflector arm 510 is optionally spaced apart (e.g., vertically spaced apart) from the shaft 200 by a spacer 520. A bolt 514 or other apparatus optionally applies a load between the deflector arm 510 and the shaft 200. A rounded lower surface 530 (e.g., a ball) optionally at least partially transfers a load between the deflector arm 510 and the shaft 200. The bolt 514 is optionally adjustable in order to increase or decrease the load on the lower surface 530. The rounded lower surface 530 is optionally located at or near an axial midpoint of the shaft 200 (e.g., at or near a location equidistant to the ends 220-1, 220-2). Deflection of the shaft 200 optionally changes a deflection of the deflector arm 510 such that one or more strain gauges 550 generate a modified strain signal related to the amount of deflection of the shaft 200.

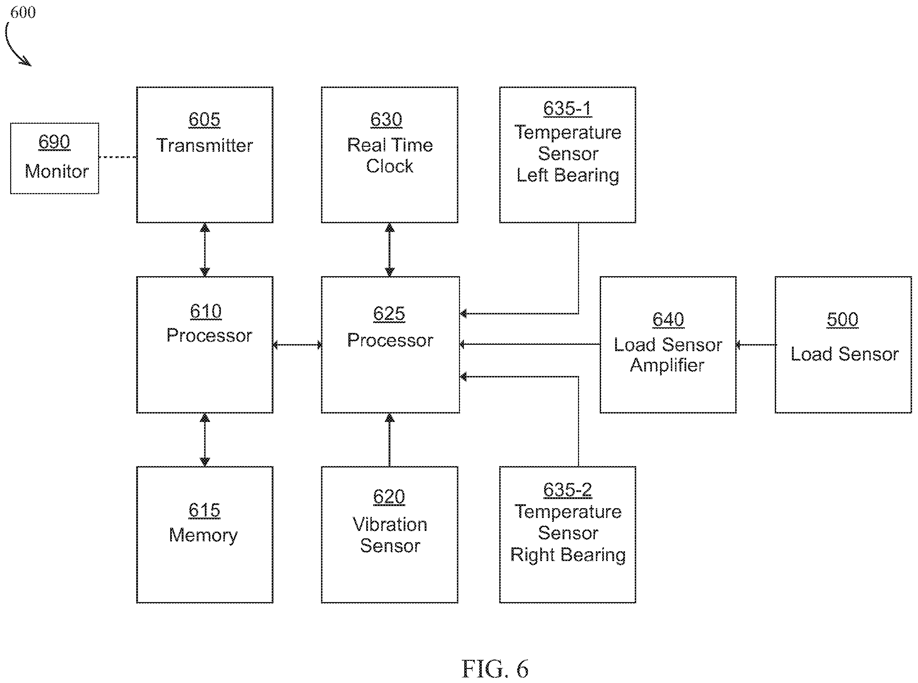

Referring to FIG. 6, an embodiment of a monitoring system 600 is schematically illustrated. The load sensor 500 (e.g., a load cell and/or strain gauge thereof) is optionally in data communication with a processor 625 (e.g., optionally via an amplifier 640 which is optionally configured to convert an analog signal to a digital signal). One or more temperature sensors 635 are optionally in data communication with the processor 625. A vibration sensor 620 (e.g., optionally mounted to the shaft 200) is optionally in data communication with the processor 625. A real time clock 630 is optionally in data communication with the processor 625. The processor 625 optionally transmits signals (e.g., at least partially processed signals) from the various sensors to a processor 610 in data communication with the processor 625. The processor 610 is optionally in data communication with a memory 615 (e.g., SD card or other memory). The processor 610 is optionally in fluid communication with a transmitter 605 (e.g., antenna). The transmitter 605 optionally comprises a wireless transmitter (e.g., a WiFi interface access point). The transmitter 605 is optionally at least partially disposed in the cavity 250. The transmitter 605 is optionally in data communication (e.g., wireless communication) with a monitor 690. The monitor 690 optionally comprises a graphical user interface. In some embodiments, the monitor 690 comprises a mobile computing device such as a consumer computing device (e.g., smart phone, tablet, laptop, etc.).

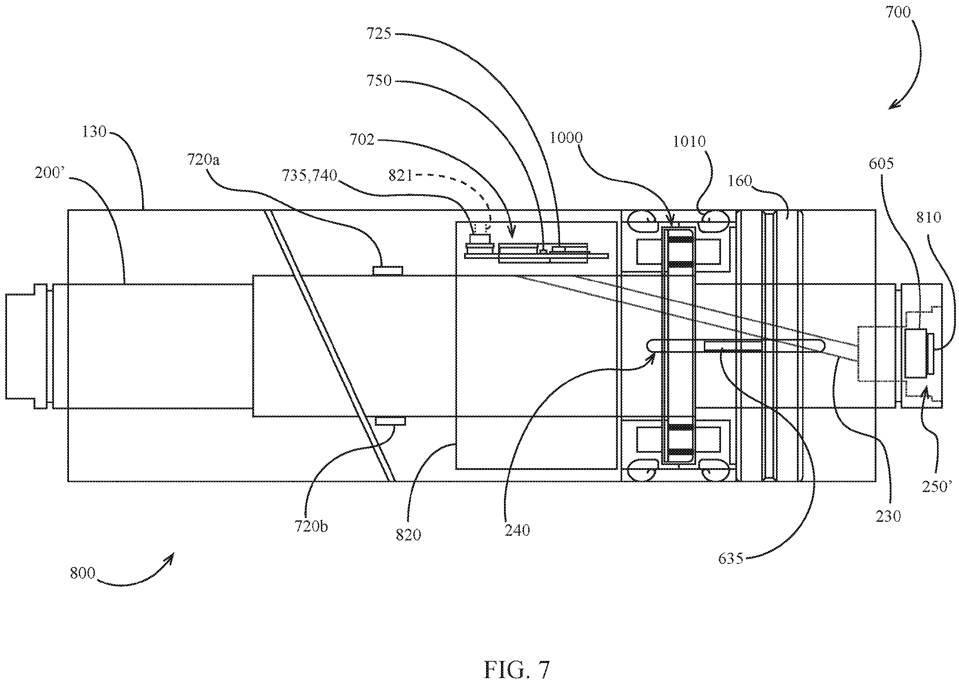

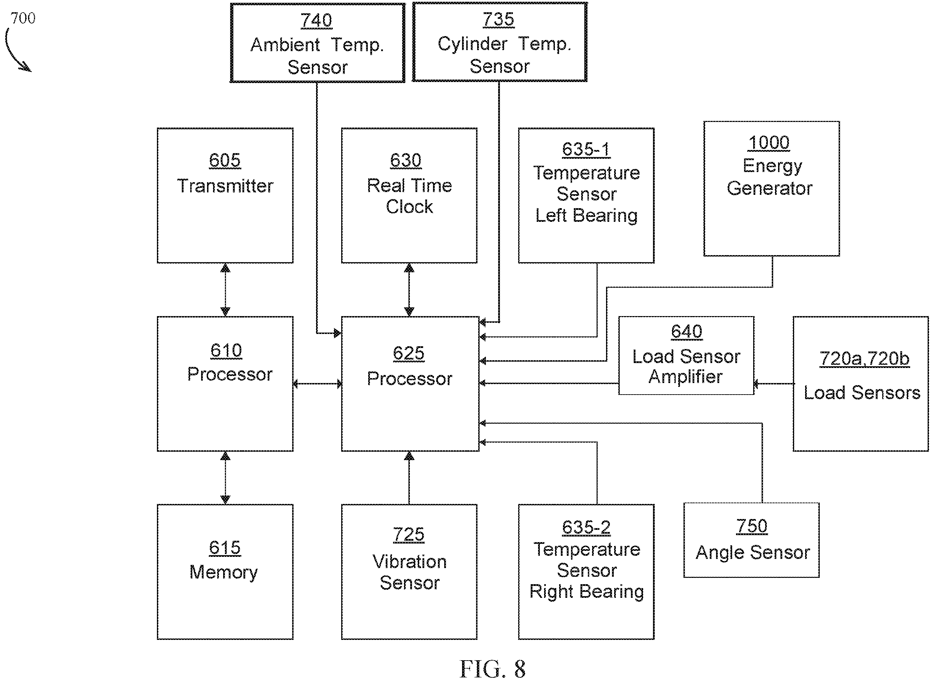

Referring to FIGs. 7 and 8, another embodiment of a conveyor idler 800 and an associated (e.g., incorporated) idler monitoring system 700 are illustrated. The idler 800 is optionally generally similar to one or more of the other idler embodiments described herein; in some embodiments the idler 800 includes an optionally modified shaft 200' rollingly supporting the cylinder 130. An optionally modified cavity 250' (e.g., in or adjacent to shaft 200') optionally at least partially houses a transmitter 605. The idler 800 optionally includes an identifier 810 (e.g., RFID tag or QR code) which may be provided at or adjacent to the end of shaft 200'. A sensor housing 820 (e.g., generally annular housing) is optionally mounted to the shaft 200', e.g., optionally inside the cylinder 130 and optionally between bearings 160.

As illustrated in FIG. 8, the idler monitoring system 700 includes one or more transmitters 605 and one or more bearing temperature sensors 636 and optionally includes one or more components described as part of the previously described system 600 (e.g., clock 630, processor 610, processor 625, memory 615, load sensor amplifier 640). The idler monitor system 700 includes a vibration sensor and an energy generator 1000 in data communication with transmitter 605 and also optionally includes one or more additional devices in data communication with transmitter 605, e.g., one or more load sensors 720, a cylinder temperature sensor 735, an ambient temperature sensor 740, and angle sensor 750. In some embodiments, one or more of the sensors (e.g., sensors 735, 740, and/or 750) are mounted to a circuit board 702 which may also support one or more components described as part of the previously described system 600 (e.g., clock 630, processor 610, processor 625, memory 615, load sensor amplifier 640, etc.). The circuit board 702 is optionally supported on (and/or is optionally at least partially housed in) the housing 820.

One or more load sensors 720 optionally comprise strain gauges mounted directly to the shaft 200'. In some embodiments the load sensors 720 are mounted to a curved (e.g., cylindrical) surface of the shaft; in other embodiments, one or more load sensors are mounted to a machined flat in the shaft and/or a flat surface supported on the shaft. In some embodiments, a first load cell 720a is mounted at a first location on the shaft 200' and a second load cell 720b is mounted at a second location on the opposite side of the shaft. In some embodiments, load cells 720a, 720b are mounted at the same or similar distance from an end of the shaft, such as at or adjacent to the transverse center of the shaft).

One or more vibration sensors 725 are configured to detect vibration of the idler (e.g., of the bearing 160) and generate a corresponding signal and/or corresponding data to a processor and/or to the transmitter. In some embodiments, the vibration sensor 725 comprises a noise sensor (e.g., an electret microphone).

One or more cylinder temperature sensors 735 are optionally configured and positioned to detect the temperature of an inner surface of cylinder 130. In some embodiments, the sensor 735 comprises an infrared temperature sensor optionally oriented toward the inner surface of cylinder 130. In some embodiments, the sensor 735 is at least partially housed in housing 820 and an opening 821 is optionally provided in the housing 820 between the sensor 735 and the inner surface of cylinder 130.

One or more ambient air temperature sensors 740 (resistance temperature detector, etc.) are optionally configured and positioned to detect the temperature of ambient air inside the idler.

One or more angle sensors 750 (e.g., accelerometers, etc.) are optionally configured and positioned to generate a signal related to an orientation of the idler (e.g., the idler shaft) relative to horizontal. It should be appreciated that in troughing idler assembly embodiments, the idlers installed in the left, right and center of the assembly may have differing orientations which may be used to identify where the idler is installed on the assembly.

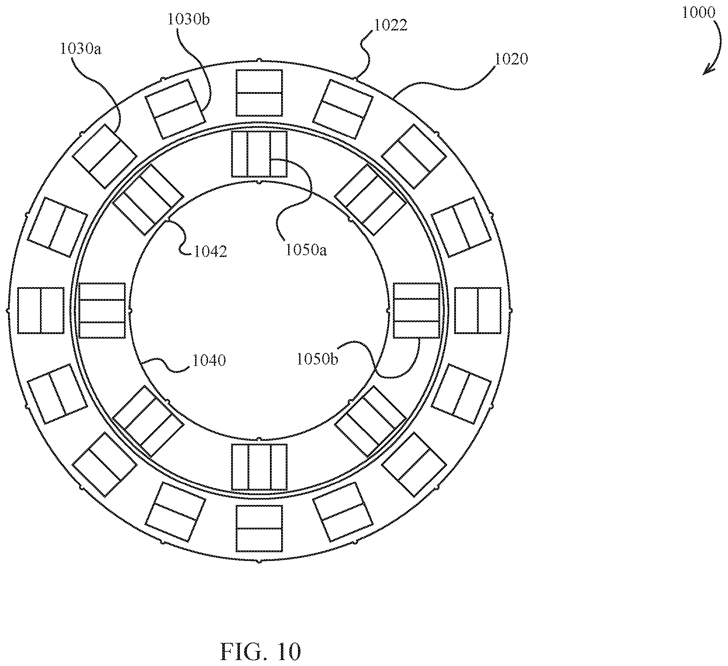

One or more energy generators 1000 are configured and positioned to generate power by the rotation of cylinder 130 about the shaft 200'. Turning to FIG. 10, an embodiment of an energy generator 1000 is illustrated. The energy generator 1000 optionally comprises an inner ring 1040 configured to be supported on (and optionally remain stationary with) shaft 200'. The energy generator 1000 optionally comprises an outer ring 1020 configured to be supported in (e.g., press-fit into) and optionally rotate with the cylinder 130. In some embodiments, protuberances 1022, 1042 or roughness elements or other elements are provided on the inner surface of inner ring 1040 and/or on the outer surface of outer ring 1020, respectively. A plurality of radially arranged magnets 1030 (e.g., permanent magnets such as neodymium magnets, etc.) are optionally supported in the outer ring 1020. A plurality of radially arranged electromagnetic coils 1050 (e.g., conductive coils such as copper coils). In operation, rotation of the outer ring 1020 with the cylinder 130 creates energy which is optionally transmitted to an energy storage device (e.g., battery and/or to a power-consuming component of the system 700). In some embodiments, energy generation pulses are also transmitted and/or processed by the system 700 to determine a number of rotations and/or a rotational speed of the cylinder 130. In some embodiments, one or more clamps 1010 are positioned to secure the outer ring 1040 to the cylinder 130.

One or more rotation sensors are optionally provided to detect a rotational speed and/or number of rotations of the cylinder 130. In some embodiments, a signal generated by the energy generator 1000 is used to determine the speed and/or number of rotations of cylinder 130 such that the energy generator 1000 may be considered a rotation sensor. In other embodiments, a different or additional rotation sensor (e.g., Hall effect sensor, etc.) is provided.

In some embodiments, the rotational speed of the cylinder 130 is compared to a belt speed (e.g., measured or assumed belt speed) in order to estimate a current cylinder diameter and/or current cylinder wear percentage. For example, in some embodiments an adjustment factor based on the comparison between the cylinder rotational speed and belt speed may be applied to a nominal cylinder diameter in order to determine a current cylinder diameter. A percentage wear of the cylinder 130 may be determined by dividing the current cylinder diameter by the nominal cylinder diameter. The calculation steps described herein may be performed by a processor connected to the idler or remote from the idler.

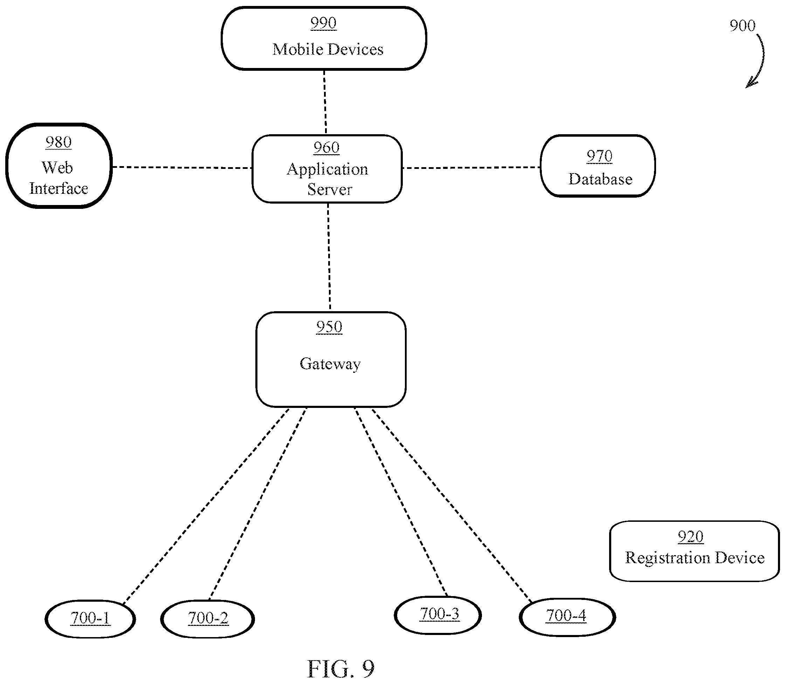

Referring to FIG. 9, an idler network monitoring system 900 (which may also be referred to as a conveyor monitoring system) is illustrated schematically. A plurality of systems 700 are, via transmitters 605 thereof in data communication with communication gateway 950 such as a LoRaWAN gateway, the specifications of which are provided by the LoRa Alliance of Freemont, California. In other examples, not according to the invention, the gateway 950 may be replaced with or supplemented by another communication device such as a WiFi access point. The gateway 950 is in data communication (e.g., via an Internet connection) with an application server 960 (e.g., cloud-based application server). The application server 960 optionally provides data and/or analysis (e.g., failure analysis, diagnostics, etc.) to a web interface 980, a mobile device 990, and/or to a database 970 (e.g., cloud-based database 970).

The application server 960 receives one or more idler-related measurements described herein (i.e. one or more of the measurements carried out by system 700). The application server 960 optionally comprises or makes use of an algorithm (e.g., machine learning algorithm, artificial intelligence algorithm, neural network algorithm, deep learning algorithm, JSON interface, etc.) to predict an idler-related diagnostic (e.g., maintenance interval, failure event, failure event time, first component to fail, etc.) based on the idler-related measurements based on measurements . In some embodiments, the application server identifies an existing idler failure based on one or more idler-related measurements (e.g., temperature, idler rotation speed relative to belt speed or nominal idler rotation speed, shaft load, etc.).

In some embodiments, a registration device 920 (e.g., including a scanner, camera, etc.) is used to register the idler (e.g., by scanning or taking an image of the identifier 810). In some embodiments, the registration device 920 includes a global positioning (GPS) system or device and optionally identifies the location of each idler upon registration. The registration device is optionally in data communication with the system 900 (e.g., via the gateway, web interface, or other component).

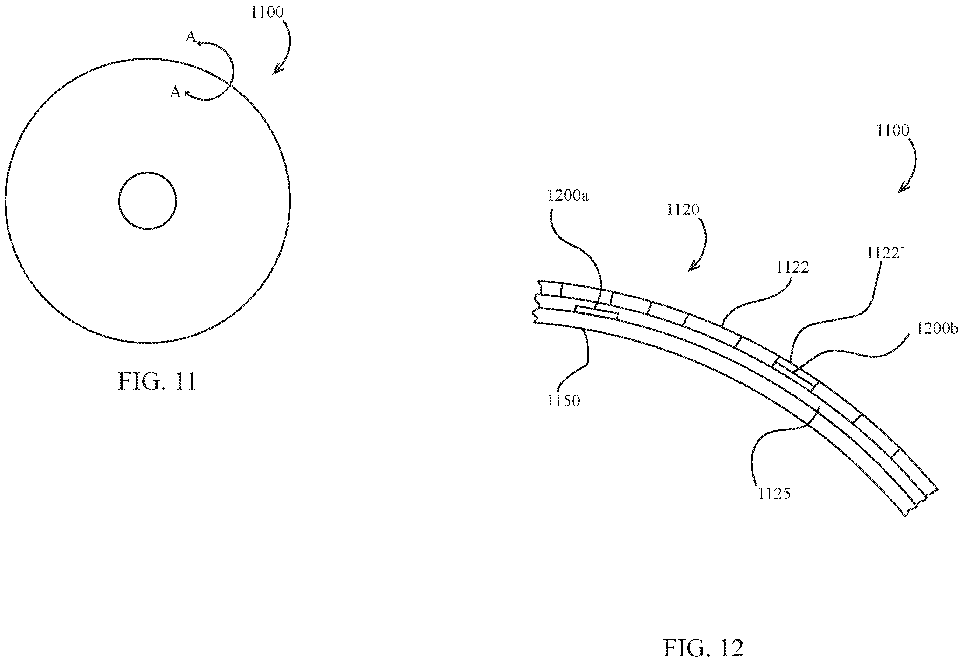

Referring to FIGs. 11 and 12, in some embodiments a pulley 1100 is optionally provided with one or more load cells 1200 for measuring loads applied to the pulley. In some embodiments the pulley 1100 includes a cylinder 1150 (e.g., metal or other material) having a surface 1125 (e.g., rubber or other material) supported thereon. In some embodiments, the surface 1125 supports one or more radially outwardly extending lagging elements 1122 (e.g., ceramic, rubber or other material). In some embodiments, one or more load cells 1200a are disposed on the cylinder 1150 (e.g., beneath the surface 1125). In some embodiments, one or more load cells 1200b are disposed between the surface 1125 and an optionally modified lagging element 1122'. In some embodiments, the pulley 1100 includes a wireless transmitter (not shown) in data communication with a load cell associated with said pulley; in some embodiments the wireless sensor associated with the pulley is in data communication with a gateway or other communication device of a conveyor monitoring system such as the system 900.

Ranges recited herein are intended to inclusively recite all values within the range provided in addition to the maximum and minimum range values. Headings used herein are simply for convenience of the reader and are not intended to be understood as limiting or used for any other purpose.

Although various embodiments have been described above, the details and features of the disclosed embodiments are not intended to be limiting, as many variations and modifications will be readily apparent to those of skill in the art. Accordingly, the scope of the present disclosure is intended to be interpreted broadly and to include all variations and modifications within the scope of the appended claims.

## Claims

1. A conveyor monitoring system for monitoring a plurality of conveyor idlers (100) on a conveyor, each conveyor idler having a cylinder (130) with an inner surface and an outer surface, the cylinder rollingly supported on a shaft (200) by a plurality of bearings (160), the conveyor monitoring system comprising:
a plurality of conveyor idler monitoring systems (600), each comprising:
a bearing temperature sensor (635) disposed to measure the temperature of at least one of the bearings;
a vibration sensor (725) configured to detect vibration of the conveyor idler;
a wireless transmitter (605) in data communication with said bearing temperature sensor and said vibration sensor, said wireless transmitter configured to transmit data from said bearing temperature sensor and said vibration sensor to a wireless receiver; and
an energy generator (1000) in electrical communication with said wireless transmitter, wherein said energy generator is powered by rotation of the cylinder relative to the shaft;
a gateway (950) in wireless data communication with said wireless transmitter of each conveyor idler monitoring system; **characterized in that** the conveyor monitoring system comprises
an application server (960) in data communication with said gateway, said application server is configured to predict an idler failure time for each of the conveyor idlers based on vibration and bearing temperature data gathered by each of said conveyor idler monitoring systems.

2. The conveyor monitoring system of claim 1 wherein each conveyor idler includes a unique identifier (810), further comprising:
a registration device (920) having one of a scanner or a camera configured to identify and unique identifier and store a location of an associated conveyor idler, said registration device in data communication with one of said gateway and said application server.

3. The conveyor monitoring system of claim 1, wherein said gateway comprises a LoRaWAN gateway.

4. The conveyor monitoring system of claim 1, further comprising a pulley monitoring system comprising a pulley load sensor supported on a pulley (1100) and a wireless transmitter in data communication with said load sensor and said gateway.

5. The conveyor monitoring system of claim 1, wherein
(i) said application server comprises a cloud-based application server; or
(ii) said application server is configured to use a machine learning algorithm to predict an idler failure.

6. The conveyor monitoring system of claim 1, wherein
(i) said application server is in data communication with a user interface, said user interface comprising one of a web interface (980) or a mobile application (990), wherein said application server is configured to send an alert related to an idler failure to said user interface, and wherein
(ii) optionally or preferably said alert includes one of an idler identification and an idler location, and wherein said alert comprises one or more of a predicted idler failure time and an existing idler failure.

7. The conveyor monitoring system of claim 5, part (ii), wherein said application server is in data communication with a user interface, said user interface comprising one of a web interface or a mobile application, wherein said application server is configured to send an alert related to an idler failure to said user interface, and optionally or preferably, wherein said alert includes one of an idler identification and an idler location, and wherein said alert comprises one or more of a predicted idler failure time and an existing idler failure.

8. The conveyor monitoring system of claim 7, wherein the application server makes use of an artificial intelligence algorithm to predict said idler failure time based on the idler-related measurements based on said vibration and temperature data.

## Patentansprüche

1. Förderbandüberwachungssystem zum Überwachen einer Vielzahl von Förderbandlaufrollen (100) an einem Förderband, wobei jede Förderbandlaufrolle einen Zylinder (130) mit einer Innenfläche und einer Außenfläche aufweist, der Zylinder durch eine Vielzahl von Lagern (160) rollend auf einer Welle (200) gelagert ist und das Förderbandüberwachungssystem Folgendes umfasst:
eine Vielzahl von Förderbandlaufrollenüberwachungssystemen (600), die jeweils Folgendes umfassen:
einen Lagertemperatursensor (635), der angeordnet ist, um die Temperatur von mindestens einem der Lager zu messen;
einen Vibrationssensor (725), der dazu konfiguriert ist, Vibration der Förderbandlaufrolle zu detektieren;
einen Drahtlossender (605) in Datenkommunikation mit dem Lagertemperatursensor und dem Vibrationssensor, wobei der Drahtlossender dazu konfiguriert ist, Daten von dem Lagertemperatursensor und dem Vibrationssensor an einen Drahtlosempfänger zu übertragen; und
einen Energiegenerator (1000) in elektrischer Verbindung mit dem Drahtlossender, wobei der Energiegenerator durch Drehung des Zylinders relativ zu der Welle angetrieben wird;
ein Gateway (950) in Drahtlosdatenkommunikation mit dem Drahtlossender jedes Förderbandlaufrollenüberwachungssystems; **dadurch gekennzeichnet, dass** das Förderbandüberwachungssystem einen Anwendungsserver (960) in Datenkommunikation mit dem Gateway umfasst, der Anwendungsserver dazu konfiguriert ist, basierend auf Vibrations- und Lagertemperaturdaten, die durch jedes der Förderbandlaufrollenüberwachungssysteme gesammelt werden, einen Laufrollenfehlerzeitpunkt für jede der Förderbandlaufrollen vorherzusagen.

2. Förderbandüberwachungssystem nach Anspruch 1, wobei jede Förderbandlaufrolle eine eindeutige Kennung (810) beinhaltet, ferner umfassend:
eine Registrierungseinrichtung (920), die eines von einem Scanner oder einer Kamera aufweist, der/die dazu konfiguriert ist, die eindeutige Kennung zu identifizieren und einen Standort einer zugehörigen Förderbandlaufrolle zu speichern, wobei die Registrierungseinrichtung in Datenkommunikation mit einem von dem Gateway und dem Anwendungsserver steht.

3. Förderbandüberwachungssystem nach Anspruch 1, wobei das Gateway ein LoRaWAN-Gateway umfasst.

4. Förderbandüberwachungssystem nach Anspruch 1, ferner umfassend ein Treibrollenüberwachungssystem, das einen Treibrollenlastsensor, der auf einer Treibrolle (1100) gelagert ist, und einen Drahtlossender in Datenkommunikation mit dem Lastsensor und dem Gateway umfasst.

5. Förderbandüberwachungssystem nach Anspruch 1, wobei
(i) der Anwendungsserver einen cloudbasierten Anwendungsserver umfasst; oder
(ii) der Anwendungsserver dazu konfiguriert ist, einen Maschinenlernalgorithmus zu verwenden, um einen Laufrollenfehler vorherzusagen.

6. Förderbandüberwachungssystem nach Anspruch 1, wobei
(i) der Anwendungsserver in Datenkommunikation mit einer Benutzerschnittstelle steht, die Benutzerschnittstelle eines von einer Webschnittstelle (980) oder einer mobilen Anwendung (990) umfasst, wobei der Anwendungsserver dazu konfiguriert ist, eine Warnung in Bezug auf einen Laufrollenfehler an die Benutzerschnittstelle zu senden, und wobei
(ii) die Warnung optional oder vorzugsweise eines von einer Laufrollenkennzeichnung und einem Laufrollenstandort beinhaltet und wobei die Warnung eines oder mehrere von einem vorhergesagten Laufrollenfehler und einem bestehenden Laufrollenfehler umfasst.

7. Förderbandüberwachungssystem nach Anspruch 5 Teil (ii), wobei der Anwendungsserver in Datenkommunikation mit einer Benutzerschnittstelle steht und die Benutzerschnittstelle eines von einer Webschnittstelle oder einer mobilen Anwendung umfasst, wobei der Anwendungsserver dazu konfiguriert ist, eine Warnung in Bezug auf einen Laufrollenfehler an die Benutzerschnittstelle zu senden, und optional oder vorzugsweise wobei die Warnung eines von einer Laufrollenkennzeichnung und einem Laufrollenstandort beinhaltet und wobei die Warnung eines oder mehrere von einem vorhergesagten Laufrollenfehler und einem bestehenden Laufrollenfehler umfasst.

8. Förderbandüberwachungssystem nach Anspruch 7, wobei der Anwendungsserver einen Algorithmus mit künstlicher Intelligenz nutzt, um basierend auf die laufrollenbezogenen Messungen, die auf den Vibrations- und Temperaturdaten basieren, einen Laufrollenfehlerzeitpunkt vorherzusagen.

## Revendications

1. Système de surveillance de transporteur pour la surveillance d'une pluralité de rouleaux de transporteur (100) sur un transporteur, chaque rouleau de transporteur ayant un cylindre (130) avec une surface intérieure et une surface extérieure, le cylindre étant pris en charge par roulement sur un arbre (200) par une pluralité de roulements (160), le système de surveillance de transporteur comprenant :
une pluralité de systèmes de surveillance de rouleau de transporteur (600), chacun comprenant :
un capteur de température de roulement (635) disposé pour mesurer la température d'au moins un des roulements ;
un capteur de vibration (725) configuré pour détecter une vibration du rouleau de transporteur ;
un émetteur sans fil (605) en communication de données avec ledit capteur de température de roulement et ledit capteur de vibration, ledit émetteur sans fil configuré pour émettre des données provenant dudit capteur de température de roulement et dudit capteur de vibration à un récepteur sans fil ; et
un générateur d'énergie (1000) en communication électrique avec ledit émetteur sans fil, dans lequel ledit générateur d'énergie est alimenté par la rotation du cylindre par rapport à l'arbre ;
une passerelle (950) en communication de données sans fil avec ledit émetteur sans fil de chaque système de surveillance de rouleau de transporteur ; **caractérisé en ce que** le système de surveillance de transporteur comprend un serveur d'application (960) en communication de données avec ladite passerelle, ledit serveur d'application est configuré pour prédire un temps de défaillance de rouleau pour chacun des rouleaux de transporteur sur la base des données de vibration et de température de roulement recueillies par chacun desdits systèmes de surveillance de rouleau de transporteur.

2. Système de surveillance de transporteur selon la revendication 1, dans lequel chaque rouleau de transporteur inclut un identifiant unique (810), comprenant en outre :
un dispositif d'enregistrement (920) ayant un élément parmi un scanner ou une caméra configuré pour identifier ledit identifiant unique et stocker un emplacement d'un rouleau de transporteur associé, ledit dispositif d'enregistrement en communication de données avec un élément parmi ladite passerelle et ledit serveur d'application.

3. Système de surveillance de transporteur selon la revendication 1, dans lequel ladite passerelle comprend une passerelle LoRaWAN.

4. Système de surveillance de transporteur selon la revendication 1, comprenant en outre un système de surveillance de poulie comprenant un capteur de charge de poulie pris en charge sur une poulie (1100) et un émetteur sans fil en communication de données avec ledit capteur de charge et ladite passerelle.

5. Système de surveillance de transporteur selon la revendication 1, dans lequel
(i) ledit serveur d'application comprend un serveur d'application en nuage ; ou
(ii) ledit serveur d'application est configuré pour utiliser un algorithme d'apprentissage automatique afin de prédire une défaillance de rouleau.

6. Système de surveillance de transporteur selon la revendication 1, dans lequel
(i) ledit serveur d'application est en communication de données avec une interface utilisateur, ladite interface utilisateur comprenant un élément parmi une interface web (980) ou une application mobile (990), dans lequel ledit serveur d'application est configuré pour envoyer une alerte relative à une défaillance de rouleau à ladite interface utilisateur, et dans lequel
(ii) optionnellement ou de préférence, ladite alerte comprend une parmi une identification de rouleau et une localisation de rouleau, et dans lequel ladite alerte comprend une ou plusieurs parmi un temps de défaillance de rouleau prédit et une défaillance de rouleau existante.

7. Système de surveillance de transporteur selon la revendication 5, la partie (ii), dans lequel ledit serveur d'application est en communication de données avec une interface utilisateur, ladite interface utilisateur comprenant une parmi une interface web ou une application mobile, dans lequel ledit serveur d'application est configuré pour envoyer une alerte relative à une défaillance de rouleau à ladite interface utilisateur, et optionnellement ou de préférence, dans lequel ladite alerte inclut une parmi une identification de rouleau et une localisation de rouleau, et dans lequel ladite alerte comprend une ou plusieurs éléments parmi un temps de défaillance de rouleau prédit et une défaillance de rouleau existante.

8. Système de surveillance de transporteur selon la revendication 7, dans lequel le serveur d'application utilise un algorithme d'intelligence artificielle pour prédire le temps de défaillance de rouleau sur la base des mesures liées au rouleau sur la base desdites données de vibration et de température.
